# EUROPEAN PATENT APPLICATION

(11) **EP 4 831 717 A1**
(43) Date of publication of application: **28.10.2026**
(21) Application number: 26172980.0
(22) Date of filing: 17.04.2026
(51) Int. Cl.: G02B 27/00, G02B 27/01

(54) **SENSING COMPONENTS FOR MEASURING OPTICAL MODULE DISPLACEMENT**

(30) Priority: 23.04.2025 US 202563793443 P; 02.04.2026 US 202619637203
(71) Applicant: Apple Inc., Cupertino, CA 95014 (US)
(72) Inventor: GELLINEAU, Antonio A., Santa Clara, California (US); SOLDNER, Nicholas C., Los Altos, California (US); PATEL, Axit H., Sunnyvale, California (US); BABAIE, Gelareh, Belmont, California (US); JOLLY, Sundeep K., San Francisco, California (US); MILLER, Samuel A., Saratoga, California (US); LIN, Michael, Cupertino, California, 95014 (US); OSSWALD, Marc, Mountain View, California (US)
(74) Representative: Carpmaels & Ransford LLP

(57) **Abstract**

A head-mounted device is provided that includes a first optical module, a second optical module, a flexible support structure attaching the first optical module to the second optical module, an emitter disposed on the first optical module and configured to emit diffused light, a detector that includes a patterned mask having an array of openings and an image sensor covered by the patterned mask structure and configured to receive at least a portion of the diffused light propagating through the array of openings in the patterned mask to sense one or more corresponding diffraction patterns, and control circuitry configured to analyze the one or more diffraction patterns sensed by the image sensor of the detector to determine a relative pose displacement between the first and second optical modules. The head-mounted device can further include a beam splitter and associated detectors for sensing interference patterns and beam spots.

## Description

This application claims priority to U.S. patent application No. 19/637,203, filed April 2, 2026, and U.S. Provisional Patent Application No. 63/793,443, filed April 23, 2025, which are hereby incorporated by reference herein in their entireties.

### Field

This relates generally to electronic devices and, more particularly, to electronic devices such as head-mounted devices.

### Background

Electronic devices such as head-mounted devices may have cameras for capturing a video feed of an external scene, a graphics rendering engine for generating virtual content, and one or more displays for presenting the captured video feed of the scene and/or the generated virtual content to a user. The displays can include a left optical module for outputting content to a left eye and a right optical module for outputting content to a right eye.

To properly display content to the left and right eyes of the user, the relative position and orientation of the left and right optical modules should be known. It can be challenging to determine the relative position and orientation of the left and right optical modules during normal operation. It is within this context that the embodiments herein arise.

### Summary

An aspect of the disclosure provides a method of operating a head-mounted device that includes: a first optical module configured to output content to a first eye box; a second optical module configured to output content to a second eye box; a support structure attaching the first optical module to the second optical module, where the support structure at least partially comprises a flexible portion that, when flexed, allows the first and second optical modules to move with respect to each other; an emitter disposed on the first optical module and configured to emit diffused light; a detector that includes a patterned mask having a plurality of openings and an image sensor configured to receive at least a portion of the diffused light propagating through the plurality of openings in the patterned mask to sense one or more corresponding diffraction patterns, and control circuitry configured to analyze the one or more diffraction patterns sensed by the image sensor of the detector to determine a relative pose displacement between the first and second optical modules.

An aspect of the disclosure provides a head-mounted device that includes: a first optical module configured to output content to a first eye box; a second optical module configured to output content to a second eye box; a support structure attaching the first optical module to the second optical module, wherein the support structure at least partially comprises a flexible portion that, when flexed, allows the first and second optical modules to move with respect to each other; a light source disposed on the first optical module and configured to output a coherent light beam; a beam splitter configured to split the coherent light beam into a first light beam and a second light beam; a reflective mirror configured to reflect the first light beam; a half mirror disposed on the second optical module and configured to reflect a portion of the second light beam; a first detector configured to sense an interference pattern created from a phase shift difference between the first light beam reflecting back from the reflective mirror and the portion of the second light beam reflecting back from the half mirror; and control circuitry configured to analyze the interference pattern sensed by the first detector to determine a relative translational displacement between the first and second optical modules. The device can further include a second detector configured to sense a portion of the second light beam transmitted through the half mirror. The first detector can be configured to sense a first beam spot associated with a superimposed light beam that includes the first light beam reflecting back from the reflective mirror and the portion of the second light beam reflecting back from the half mirror, whereas the second detector can be configured to sense a second beam spot associated with the portion of the second light beam transmitted through the half mirror. The control circuitry can be configured to analyze a location of the first beam spot in the first detector and a location of the second beam spot in the second detector to determine a relative rotational displacement between the first and second optical modules.

An aspect of the disclosure provides a head-mounted device that includes: a first optical module configured to output content to a first eye box; a second optical module configured to output content to a second eye box; a support structure attaching the first optical module to the second optical module, wherein the support structure at least partially comprises a flexible portion that, when flexed, allows the first and second optical modules to move with respect to each other; a rigid structure extending between the first optical module and the second optical module; a first angle detector disposed at a first location on the rigid structure; a second angle detector disposed at a second location on the rigid structure; a first light source disposed on the first optical module and configured to output a first coherent beam towards the first angle detector; a second light source disposed on the second optical module and configured to output a second coherent beam towards the second angle detector; and control circuitry configured to analyze a location of a first beam spot sensed by the first angle detector and a location of a second beam spot sensed by the second angle detector to determine a relative rotational displacement between the first and second optical modules. The first angle detector can include a first image sensor and one or more layers of grating structures disposed over the first image sensor, whereas the second angle detector can include a second image sensor and one or more layers of grating structures disposed over the second image sensor. The first light source can be further configured to output a linearly polarized laser beam towards the first angle detector, whereas the second light source can be further configured to output a linearly polarized laser beam towards the second angle detector.

### Brief Description of the Drawings

FIG. 1 is a top view of an illustrative head-mounted device in accordance with some embodiments.
FIG. 2 is a schematic diagram of an illustrative electronic device in accordance with some embodiments.
FIG. 3 is a diagram showing how two optical modules in a head-mounted device can be joined by a support structure having a flexible portion in accordance with some embodiments.
FIG. 4 is a top view of an illustrative head-mounted device showing how an emitter and a detector can be respectively disposed on first and second optical modules in accordance with some embodiments.
FIG. 5A is a front view of an illustrative emitter in accordance with some embodiments.
FIG. 5B is a side view of an illustrative emitter in accordance with some embodiments.
FIG. 6 is side view of an illustrative detector in accordance with some embodiments.
FIG. 7 is a front view of an illustrative patterned mask structure that can be included as part of a detector of the type shown in FIG. 6 in accordance with some embodiments.
FIG. 8 is a side view illustrating how an emitter and a detector of the type shown in FIGS. 3-7 can be used to measure translational displacement in the YZ plane in accordance with some embodiments.
FIG. 9 is a side view illustrating how an emitter and a detector of the type shown in FIGS. 3-7 can be used to measure translational displacement in the X direction in accordance with some embodiments.
FIG. 10 is a flowchart of illustrative steps for using an emitter and a detector of the type shown in FIGS. 3-9 to measure relative pose between first and second optical modules in accordance with some embodiments.
FIG. 11 is a top view of an illustrative head-mounted device showing how an emitter and a detector can both be disposed on one of the two optical modules in accordance with some embodiments.
FIG. 12 is a side view of an illustrative emitter having a patterned mask structure in accordance with some embodiments.
FIGS. 13A-13E are front views of illustrative masks having a single opening in accordance with some embodiments.
FIGS. 14A-14G are front views of illustrative masks having an array of openings in accordance with some embodiments.
FIG. 15 is a top view of an illustrative head-mounted device having multiple emitters disposed at a first optical module and multiple detectors disposed at a second optical module in accordance with some embodiments
FIG. 16 is a top view of an illustrative head-mounted device having a first emitter and a first detector disposed at a first optical module and having a second detector and a second emitter disposed at a second optical module in accordance with some embodiments.
FIG. 17 is a top view of an illustrative head-mounted device having a light source disposed at a first optical module, a first detector disposed between the first optical module and a second optical module, and a second detector disposed at the second optical module in accordance with some embodiments.
FIG. 18 is a top view of an illustrative head-mounted device having a light source and a first detector disposed at a first optical module and a second detector disposed at a second optical module in accordance with some embodiments.
FIG. 19 is a top view of an illustrative head-mounted device having a light source disposed at a first optical module and two detectors disposed at a second optical module in accordance with some embodiments.
FIG. 20 is a flowchart of illustrative steps for using a light source and two detectors of the type shown in FIGS. 17-19 to measure relative pose between first and second optical modules in accordance with some embodiments.
FIG. 21 is a top view of an illustrative head-mounted device having a first light source disposed at a first optical module, a second light source disposed at a second optical module, and corresponding angle detectors facing the first and second light sources and disposed on a rigid structure in accordance with some embodiments.
FIG. 22 is a side view of an illustrative angle detector of the type shown in FIG. 21 in accordance with some embodiments.
FIG. 23 is a front view of an illustrative grating structure that can be included as part of the angle detector of FIG. 22 in accordance with some embodiments.

### Detailed Description

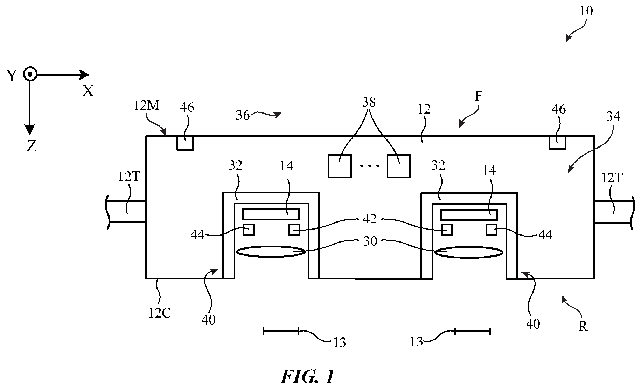

A top view of an illustrative head-mounted device is shown in FIG. 1. As shown in FIG. 1, head-mounted devices such as electronic device 10 may have head-mounted support structures such as housing 12. Housing 12 may include portions (e.g., head-mounted support structures 12T) to allow device 10 to be worn on a user's head. Support structures 12T may be formed from fabric, polymer, metal, and/or other material. Support structures 12T may form a strap or other head-mounted support structures to help support device 10 on a user's head. A main support structure (e.g., a head-mounted housing such as main housing portion 12M) of housing 12 may support electronic components such as displays 14.

Main housing portion 12M may include housing structures formed from metal, polymer, glass, ceramic, and/or other material. For example, housing portion 12M may have housing walls on front face F and housing walls on adjacent top, bottom, left, and right side faces that are formed from rigid polymer or other rigid support structures, and these rigid walls may optionally be covered with electrical components, fabric, leather, or other soft materials, etc. Housing portion 12M may also have internal support structures such as a frame (chassis) and/or structures that perform multiple functions such as controlling airflow and dissipating heat while providing structural support.

The walls of housing portion 12M may enclose internal components 38 in interior region 34 of device 10 and may separate interior region 34 from the environment surrounding device 10 (exterior region 36). Internal components 38 may include integrated circuits, actuators, batteries, sensors, and/or other circuits and structures for device 10. Housing 12 may be configured to be worn on a head of a user and may form glasses, spectacles, a hat, a mask, a helmet, goggles, and/or other head-mounted device. Configurations in which housing 12 forms goggles may sometimes be described herein as an example.

Front face F of housing 12 may face outwardly away from a user's head and face. Opposing rear face R of housing 12 may face the user. Portions of housing 12 (e.g., portions of main housing 12M) on rear face R may form a cover such as cover 12C (sometimes referred to as a curtain). The presence of cover 12C on rear face R may help hide internal housing structures, internal components 38, and other structures in interior region 34 from view by a user.

Device 10 may have one or more cameras such as cameras 46 of FIG. 1. Cameras 46 that are mounted on front face F and that face outwardly (towards the front of device 10 and away from the user) may sometimes be referred to herein as outward(ly)-facing, forward-facing, or front-facing cameras. Cameras 46 may capture visual odometry information, image information that is processed to locate objects in the user's field of view (e.g., so that virtual content can be registered appropriately relative to real-world objects), image content that is displayed in real time for a user of device 10, and/or other suitable image data. For example, outward-facing (front-facing) cameras may allow device 10 to monitor movement of the device 10 relative to the environment surrounding device 10 (e.g., the cameras may be used in forming a visual odometry system or part of a visual inertial odometry system). The outwardly-facing cameras may also be used to capture images of the environment that are displayed to a user of the device 10. If desired, images from multiple outward-facing cameras may be merged with each other and/or outward-facing camera content can be merged with computer-generated content for a user.

Device 10 may have any suitable number of cameras 46. For example, device 10 may have K cameras, where the value of K is at least one, at least two, at least four, at least six, at least eight, at least ten, at least 12, less than 20, less than 14, less than 12, less than 10, 4-10, or other suitable value. Cameras 46 may be sensitive at infrared wavelengths (e.g., cameras 46 may be infrared cameras), may be sensitive at visible wavelengths (e.g., cameras 46 may be visible cameras), and/or cameras 46 may be sensitive at other wavelengths. If desired, cameras 46 may be sensitive at both visible and infrared wavelengths.

Device 10 may have left and right optical modules 40. Optical modules 40 support electrical and optical components such as light-emitting components and lenses and may therefore sometimes be referred to as optical assemblies, optical systems, optical component support structures, lens and display support structures, electrical component support structures, or housing structures. Each optical module may include a respective display 14, lens 30, and support structure such as support structure 32. Support structure 32, which may sometimes be referred to as a lens support structure, optical component support structure, optical module support structure, or optical module portion, or lens barrel, may include hollow cylindrical structures with open ends or other supporting structures to house displays 14 and lenses 30. Support structures 32 may, for example, include a left lens barrel that supports a left display 14 and left lens 30 and a right lens barrel that supports a right display 14 and right lens 30.

Displays 14 may include arrays of pixels or other display devices to produce images. Displays 14 may, for example, include organic light-emitting diode pixels formed on substrates with thin-film circuitry and/or formed on semiconductor substrates, pixels formed from crystalline semiconductor dies, liquid crystal display pixels, scanning display devices, and/or other display devices for producing images.

Lenses 30 may include one or more lens elements for providing image light from displays 14 to respective eyes boxes 13. Lenses may be implemented using refractive glass lens elements, using mirror lens structures (catadioptric lenses), using Fresnel lenses, using holographic lenses, and/or other lens systems.

When a user's eyes are located in eye boxes 13, displays (display panels) 14 operate together to form a display for device 10 (e.g., the images provided by respective left and right optical modules 40 may be viewed by the user's eyes in eye boxes 13 so that a stereoscopic image is created for the user). The left image from the left optical module fuses with the right image from a right optical module while the display is viewed by the user.

It may be desirable to monitor the user's eyes while the user's eyes are located in eye boxes 13. For example, it may be desirable to use a camera to capture images of the user's irises (or other portions of the user's eyes) for user authentication. It may also be desirable to monitor the direction of the user's gaze. Gaze tracking information may be used as a form of user input and/or may be used to determine where, within an image, image content resolution should be locally enhanced in a foveated imaging system. To ensure that device 10 can capture satisfactory eye images while a user's eyes are located in eye boxes 13, each optical module 40 may be provided with a camera such as camera 42 and one or more light sources such as light-emitting diodes 44 or other light-emitting devices such as lasers, lamps, etc. Cameras 42 and light-emitting diodes 44 may operate at any suitable wavelengths (visible, infrared, and/or ultraviolet). As an example, diodes 44 may emit infrared light that is invisible (or nearly invisible) to the user. This allows eye monitoring operations to be performed continuously without interfering with the user's ability to view images on displays 14.

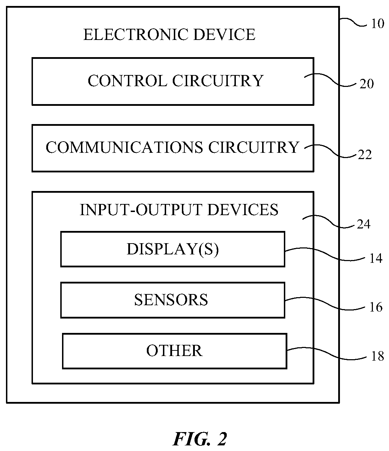

A schematic diagram of an illustrative electronic device such as a head-mounted device or other wearable device is shown in FIG. 2. Device 10 of FIG. 2 may be operated as a stand-alone device and/or the resources of device 10 may be used to communicate with external electronic equipment. As an example, communications circuitry in device 10 may be used to transmit user input information, sensor information, and/or other information to external electronic devices (e.g., wirelessly or via wired connections). Each of these external devices may include components of the type shown by device 10 of FIG. 2.

As shown in FIG. 2, a head-mounted device such as device 10 may include control circuitry 20. Control circuitry 20 may include storage and processing circuitry for supporting the operation of device 10. The storage and processing circuitry may include storage such as nonvolatile memory (e.g., flash memory or other electrically-programmable-read-only memory configured to form a solid state drive), volatile memory (e.g., static or dynamic random-access-memory), etc. One or more processors in control circuitry 20 may be used to gather input from sensors and other input devices and may be used to control output devices. The processing circuitry may be based on one or more processors such as microprocessors, microcontrollers, digital signal processors, baseband processors and other wireless communications circuits, power management units, audio chips, application specific integrated circuits, etc. During operation, control circuitry 20 may use display(s) 14 and other output devices in providing a user with visual output and other output. Control circuitry 20 may be configured to perform operations in device 10 using hardware (e.g., dedicated hardware or circuitry), firmware, and/or software. Software code for performing operations in device 10 may be stored on storage circuitry (e.g., non-transitory (tangible) computer readable storage media that stores the software code). The software code may sometimes be referred to as program instructions, software, data, instructions, or code. The stored software code may be executed by the processing circuitry within circuitry 20.

To support communications between device 10 and external equipment, control circuitry 20 may communicate using communications circuitry 22. Circuitry 22 may include antennas, radio-frequency transceiver circuitry, and other wireless communications circuitry and/or wired communications circuitry. Circuitry 22, which may sometimes be referred to as control circuitry and/or control and communications circuitry, may support bidirectional wireless communications between device 10 and external equipment (e.g., a companion device such as a computer, cellular telephone, or other electronic device, an accessory such as a point device or a controller, computer stylus, or other input device, speakers or other output devices, etc.) over a wireless link.

For example, circuitry 22 may include radio-frequency transceiver circuitry such as wireless local area network transceiver circuitry configured to support communications over a wireless local area network link, near-field communications transceiver circuitry configured to support communications over a near-field communications link, cellular telephone transceiver circuitry configured to support communications over a cellular telephone link, or transceiver circuitry configured to support communications over any other suitable wired or wireless communications link. Wireless communications may, for example, be supported over a Bluetooth^{®} link, a WiFi^{®} link, a wireless link operating at a frequency between 10 GHz and 400 GHz, a 60 GHz link, or other millimeter wave link, a cellular telephone link, or other wireless communications link. Device 10 may, if desired, include power circuits for transmitting and/or receiving wired and/or wireless power and may include batteries or other energy storage devices. For example, device 10 may include a coil and rectifier to receive wireless power that is provided to circuitry in device 10.

Device 10 may include input-output devices such as devices 24. Input-output devices 24 may be used in gathering user input, in gathering information on the environment surrounding the user, and/or in providing a user with output. Devices 24 may include one or more displays such as display(s) 14. Display(s) 14 may include one or more display devices such as organic light-emitting diode display panels (panels with organic light-emitting diode pixels formed on polymer substrates or silicon substrates that contain pixel control circuitry), liquid crystal display panels, microelectromechanical systems displays (e.g., two-dimensional mirror arrays or scanning mirror display devices), display panels having pixel arrays formed from crystalline semiconductor light-emitting diode dies (sometimes referred to as microLEDs), and/or other display devices.

Sensors 16 in input-output devices 24 may include force sensors (e.g., strain gauges, capacitive force sensors, resistive force sensors, etc.), audio sensors such as microphones, touch and/or proximity sensors such as capacitive sensors such as a touch sensor that forms a button, trackpad, or other input device), and other sensors. If desired, sensors 16 may include optical sensors such as optical sensors that emit and detect light, ultrasonic sensors, optical touch sensors, optical proximity sensors, and/or other touch sensors and/or proximity sensors, monochromatic and color ambient light sensors, image sensors (e.g., cameras), fingerprint sensors, iris scanning sensors, retinal scanning sensors, and other biometric sensors, temperature sensors, sensors for measuring three-dimensional non-contact gestures ("air gestures"), pressure sensors, sensors for detecting position, orientation, and/or motion of device 10 and/or information about a pose of a user's head (e.g., accelerometers, magnetic sensors such as compass sensors, gyroscopes, and/or inertial measurement units that contain some or all of these sensors), health sensors such as blood oxygen sensors, heart rate sensors, blood flow sensors, and/or other health sensors, radio-frequency sensors, three-dimensional camera systems such as depth sensors (e.g., structured light sensors and/or depth sensors based on stereo imaging devices that capture three-dimensional images) and/or optical sensors such as self-mixing sensors and light detection and ranging (lidar) sensors that gather time-of-flight measurements (e.g., time-of-flight cameras), humidity sensors, moisture sensors, gaze tracking sensors, electromyography sensors to sense muscle activation, facial sensors, and/or other sensors. In some arrangements, device 10 may use sensors 16 and/or other input-output devices to gather user input. For example, buttons may be used to gather button press input, touch sensors overlapping displays can be used for gathering user touch screen input, touch pads may be used in gathering touch input, microphones may be used for gathering audio input (e.g., voice commands), accelerometers may be used in monitoring when a finger contacts an input surface and may therefore be used to gather finger press input, etc.

If desired, electronic device 10 may include additional components (see, e.g., other devices 18 in input-output devices 24). The additional components may include haptic output devices, actuators for moving movable housing structures, audio output devices such as speakers, light-emitting diodes for status indicators, light sources such as light-emitting diodes that illuminate portions of a housing and/or display structure, other optical output devices, and/or other circuitry for gathering input and/or providing output. Device 10 may also include a battery or other energy storage device, connector ports for supporting wired communication with ancillary equipment and for receiving wired power, and other circuitry.

Display(s) 14 can be used to present a variety of content to a user's eye. The left and right displays 14 that are used to present a fused stereoscopic image to the user's eyes when viewing through eye boxes 13 can sometimes be referred to collectively as a display 14. As an example, virtual reality (VR) content can be presented by display 14. Virtual reality content may refer to content that only includes virtual objects within a virtual reality (computer-generated) environment. As another example, mixed reality (MR) content can be presented by display 14. Mixed reality content may refer to content that includes virtual objects and real objects from the real-world physical environment in which device 10 is being operated. As another example, only real-world content can be presented by display 14. The real-world content may refer to images being captured by one or more outward-facing cameras (see, e.g., cameras 46 in FIG. 1) and passed through as a live feed to the user. The real-world content being captured by the front-facing cameras is therefore sometimes referred to as a camera passthrough feed, a (live) video passthrough feed, or a passthrough video feed (stream).

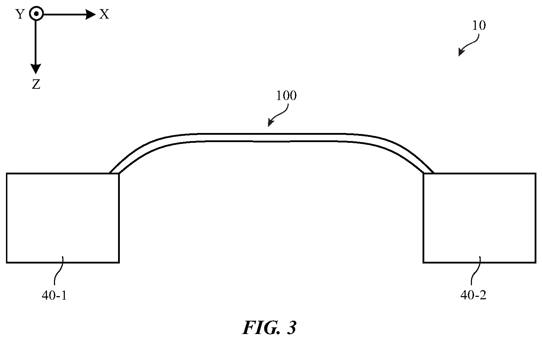

In accordance with some embodiments, the two optical modules in head-mounted device 10 such as left optical module 40-1 and right optical module 40-2 may be physically connected via a support structure 100 (see, e.g., FIG. 3). As shown in FIG. 3, support structure 100 may have a first distal end attached to optical module 40-1 and a second distal end attached to optical module 40-2. Support structure 100 joining the two optical modules 40 is sometimes referred to as an optical module (OM) support structure or bridge. Support structure 100 may have one or more flexible portion(s) and optionally one or more rigid or semi-rigid portion(s). Support structure 100 having at least a flexible or bendable portion is sometimes referred to as a flexible support structure 100.

Device 10, which includes optical modules 40-1 and 40-2 that can be connected together by flexible support structure 100 as shown in the example of FIG. 3, may be mounted on a user's head during normal operation. The yaw, roll, and pitch of a user's head, which represent three degrees of freedom (DoF), may collectively define a user's "head orientation." The user's head orientation along with a position of the user, which represent three additional degrees of freedom (e.g., X, Y, Z in a 3-dimensional space), can be collectively defined herein as the user's "head pose." The user's head pose therefore represents six degrees of freedom (6DoF).

Since device 10 is mounted on a user's head during normal operation, references herein to head pose, head movement, head orientation, yaw of the user's head (e.g., rotation around a vertical axis), pitch of the user's head (e.g., rotation around a side-to-side axis), roll of the user's head (e.g., rotation around a front-to-back axis), etc. may be considered interchangeable with references to device pose, device movement, device orientation, yaw of the device, pitch of the device, roll of the device, etc. In certain embodiments, components 38 in device 10 (see FIG. 1) may include 6DoF tracking sensors, which can be used to monitor both rotational movement such as roll, pitch, and yaw and also positional/translational movement in a 3D environment. Rotational movement (e.g., change in device orientation) and translational movement (e.g., change in device position or location) can collectively be defined as a change or transformation in pose.

Optical modules 40-1 and 40-2 are configured to display respective left and right images to the user's eyes, where the left image from optical module 40-1 fuses with the right image from optical module 40-2 while the display is viewed by the user. Correct fusing of the left and right images may depend on proper physical alignment between the two optical modules 40-1 and 40-2. In some head mounted devices, the left and right optical modules are attached or fixed to a rigid housing structure. In such devices, the physical alignment of the left and right optical modules is well controlled and can be calibrated a priori. In certain head-mounted devices, such as in device 10 of the type shown in FIG. 3, optical modules 40-1 and 40-2 are connected together via a flexible support structure 100 and can thus move relative to each other during normal operation. When device 10 is at rest and not being mounted on a user's head, optical modules 40-1 and 40-2 may each have a default pose. During operation or when device 10 is mounted on a user's head, support structure 100 might twist, bend, flex, stretch, compress, contort, or otherwise deform in a way such that optical modules 40-1 and 40-2 move with respect to each other and thus deviate from their default poses. Operated as such, optical module 40-1 can exhibit a first pose in 3D (XYZ) space, whereas optical module 40-2 can exhibit a second pose in the 3D space. The pose of an optical module 40 is sometimes referred to as an optical module pose and can represent six degrees of freedom (6DoF).

A difference in the first pose of optical module 40-1 and the second pose of optical module 40-2 can be referred to and defined herein as a "relative" pose between the pair of optical modules. The two modules can have a default relative pose, which represents any difference between the default pose of optical module 40-1 and the default pose of optical module 40-2. Any movement from the default pose of optical module 40-1 and/or optical module 40-2 can result in a deviation from the default relative pose. Such deviation or change from the default relative pose is sometimes referred to and defined herein as a relative pose displacement. The relative pose displacement between optical modules 40-1 and 40-2 can include translational displacement (e.g., a relative change in the position or location of the two modules from the default poses) and/or rotational displacement (e.g., a relative change in the orientation of the two modules from the default poses).

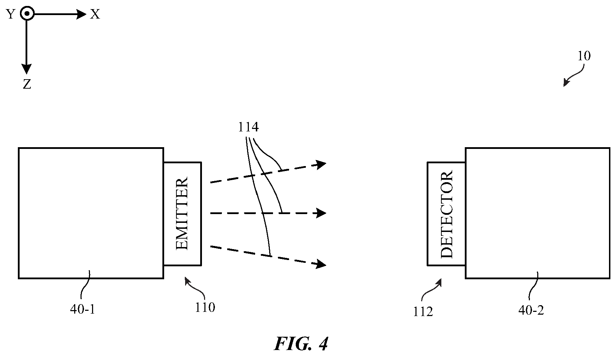

For head-mounted device 10 in which optical modules 40-1 and 40-2 are likely to move relative to one another (e.g., as flexible structure 100 bends or twists during normal operation), it may be desirable to measure the relative pose displacement between the two modules. FIG. 4 shows one embodiment of components that can be included within device 10 for measuring the relative pose displacement between the left and right optical modules. As shown in FIG. 4, device 10 can include an emitter component 110 disposed on or at optical module 40-1 and a detector component 112 disposed on or at optical module 40-2. Emitter 110 may be a light emitter configured to output diffused light 114. Emitter 110 may output light 114 in pulses (e.g., diffused light pulses). The diffused light 114 output from emitter 110 may travel towards detector 112. There should be a line of sight between emitter 110 and detector 112. The example of FIG. 4 in which emitter 110 is disposed on first optical module 40-1 and detector 112 is disposed on second optical module 40-2 is illustrative. In other embodiments, emitter 110 can be disposed on second optical module 40-2 while detector 112 can be disposed on first optical module 40-1.

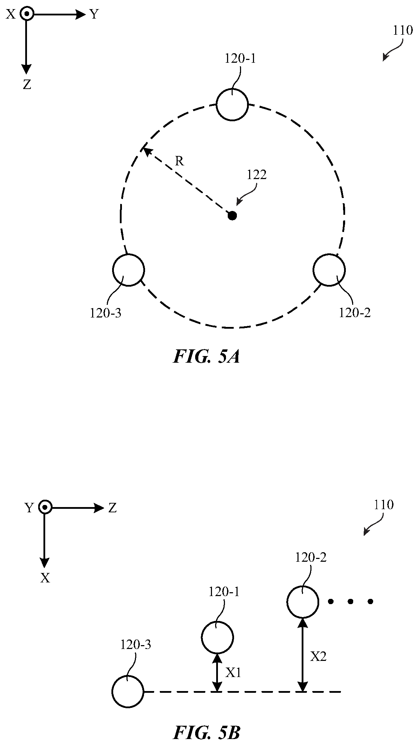

FIG. 5A is a front view of an illustrative emitter 110 in accordance with some embodiments. As shown in FIG. 5A, emitter 110 can include three light-emitting components such as light-emitting components 120-1, 120-2, and 120-3. Light-emitting components 120-1, 120-2, and 120-3 may be wide-emitting light-emitting diodes (LEDs) or other types of LEDs configured to output diffused light. The light-emitting components 120-1, 120-2, and 120-3 may be arranged along a circular path having a center 122 and radius R. Light-emitting components 120 can all emit light of the same wavelength or different wavelengths. As an example, light-emitting component 120-1 can be configured to emit light in a first range of wavelength(s) (e.g., component 120-1 may be a first LED configured to emit red light); light-emitting component 120-2 can be configured to emit light in a second range of wavelengths(s) different than the first range of wavelength(s) (e.g., component 120-2 may be a second LED configured to emit green light); and light-emitting component 120-3 can be configured to emit light in a third range of wavelengths(s) different than the first and second ranges of wavelengths (e.g., component 120-3 may be a third LED configured to emit blue light). If desired, components 120 can be configured to emit infrared (IR) light, ultraviolet (UV) light, or light with other suitable wavelengths.

The example of FIG. 5A in which emitter 110 includes three LEDs is illustrative. In general, emitter 110 can include two or more light-emitting components 120, three to five light-emitting components 120, five to ten light-emitting components 120, or more than ten light-emitting components 120. The plurality of light-emitting components 120 can be arranged along a circular path, triangular path, a rectangular path, a pentagonal path, a hexagonal path, or an octagonal path, or can be distributed as an array of LEDs or any suitable pattern with even or uneven spacing across the YZ plane shown in the orientation of FIG. 5A. Having more light-emitting components 120 across the YZ plane can be technically advantageous and beneficial to detect movement of optical modules in the YZ plane.

FIG. 5B is a side view of emitter 110 of the type described in connection with FIG. 5A. As shown in FIG. 5B, light-emitting components 120 may be disposed at different heights (depths) within the emitter. For instance, light-emitting component 120-1 may be offset in height (depth) from light-emitting component 120-3 by a distance X1, whereas light-emitting component 120-2 may be offset in height (depth) from light-emitting component 120-3 by a distance X2 that is different than X1. These various heights in the direction of axis X can, for example, be achieved by tilting or rotating emitter 110 about axis Y and/or Z when optical modules 40-1 and 40-2 are in their nominal (unflexed) positions. The example of FIG. 5B in which emitter 110 includes three LEDs at different depths is illustrative. In general, emitter 110 can include two or more light-emitting components 120 disposed at varying depths, three to five light-emitting components 120 disposed at varying depths, five to ten light-emitting components 120 disposed at varying depths, or more than ten light-emitting components 120 disposed at varying depths. Having more light-emitting components 120 at varying depths along the X (height) direction can be technically advantageous and beneficial to detect movement of optical modules in the X direction.

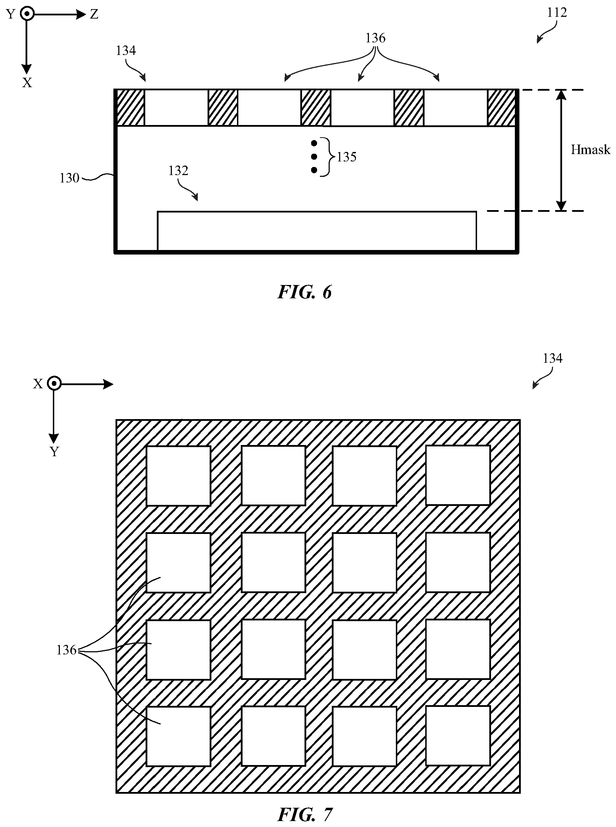

FIG. 6 is side view of an illustrative detector 112 in accordance with some embodiments. As shown in FIG. 6, detector 112 may include a detector housing 130, sometimes referred to as a module housing. An image sensor such as image sensor 132 may be disposed at a base of housing 130. Image sensor 132 may include an array of imaging pixels (e.g., hundreds or thousands of pixels). Image sensor 132 may be a color image sensor configured to output a color image or a monochrome image sensor configured to output a monochromatic image. Device configurations in which image sensor 132 is a color image sensor are sometimes described herein as an example. A mask structure such as mask structure 134 can be disposed over image sensor 132. Mask structure 134 within detector 112 is sometimes referred to herein as a detector masking layer. Mask structure 134 may extend from one edge of housing 130 to another edge of housing 130. Mask structure 134 can be configured as a top cover layer for detector 112. Mask structure 134 may be disposed a distance (height) Hmask away from sensor 132. This mask-to-sensor height Hmask can be configured or selected based on desired sensing requirements. Mask structure 134 may represent an opaque layer with a plurality of openings 136. Incoming light will be blocked by the opaque portions of mask structure 134 but can travel through openings 136. Openings 136 may be air gaps or can optionally be filled with transparent material such as glass, acrylic, polycarbonate, quartz, resin, or other transparent or translucent material. These transparent openings 136 are thus sometimes referred to herein as transparent (light-transmitting) windows or holes. Mask structure 134 configured in this way is sometimes referred to as a patterned mask, a shadow mask, a perforated mask, or a mask. The example of FIG. 6 in which detector 112 includes a single layer of mask structure 134 is illustrative. If desired, detector 112 can include two or more mask layers 134 stacked vertically with respect to one another to help improve the accuracy of a corresponding diffraction pattern detection at sensor 132, as illustrated by ellipsis 135. As an example, the two or more mask layers 134 can be parallel to one another. As another example, at least some of the two or more mask layers 134 can be angled or tilted with respect to one another.

FIG. 7 is a front view of an illustrative patterned mask structure 134 of the type described in connection with FIG. 6. As shown in FIG. 7, mask structure 134 can include an array of four-by-four openings 136. Each opening 136 may be a square or rectangular opening. Such pattern of mask openings 136 in structure 134 is illustrative. In general, mask structure 134 may include only one opening 136, an array of two-by-two openings 136 (for a total for four windows), an array of three-by-three openings 136 (for a total of nine windows), an array of four-by-four openings 136 (for a total of 16 windows as shown in the example of FIG. 7), an array of five-by-five openings 136 (for a total for 25 windows), an array of six-by-six openings 136 (for a total for 36 windows), fewer than 50 openings, fewer than 100 openings, or can include other regular or irregular pattern of openings arranged across the YZ plane. The example of FIG. 7 where each opening 136 is square-shaped is also illustrative. If desired, each opening 136 in mask structure 134 can be circular, rectangular, hexagonal, octagonal, or can have other suitable shapes.

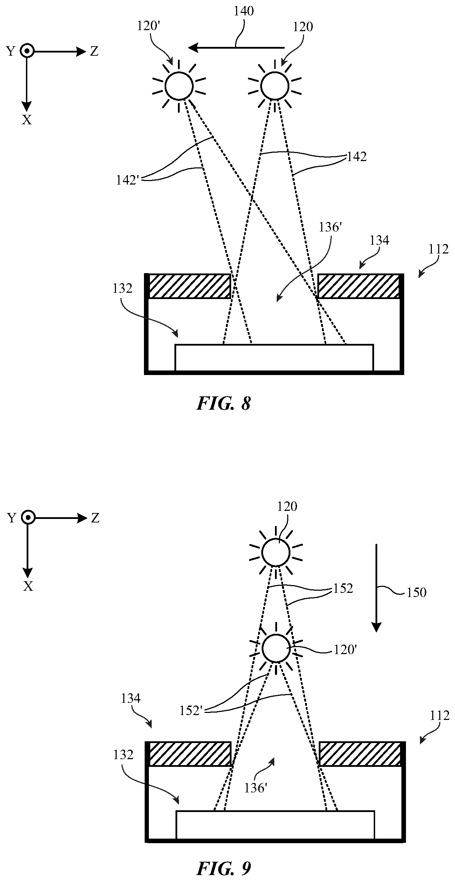

The working principle of emitter 110 and detector 112 can be illustrated by FIGS. 8 and 9. FIG. 8 is a side view illustrating how emitter 110 and detector 112 of the type described in connection with FIGS. 3-7 can be used to measure translational displacement in the YZ plane. For illustrative purposes, FIG. 8 shows only one exemplary light-emitting component 120 and one opening 136' in the mask structure 134, but the principles described below can extend to an emitter 110 with any number of light-emitting components 120 and a detector 112 with any number of mask openings 136'. As shown in FIG. 8, light-emitting component 120, when disposed at a first (initial) position can emit diffused light 142 that produces a corresponding first diffraction pattern that is detected by image sensor 132. Such diffraction pattern created by shining diffused light through patterned mask structure 134 is sometimes referred to as a mask pattern shadow, a light pattern, an edge pattern, or pattern. If the light source moves in the direction of arrow 140 to a second (new) position, then the same light-emitting component in the new position (see 120') will then emit diffused light 142' that produces a corresponding second diffraction pattern (or mask pattern shadow) that is detected by image sensor 132. Such shift in the detected diffraction patterns can be used to determine a corresponding amount of movement (translation) in the YZ plane. In other words, a relative translational displacement between the two optical modules in the YZ plane can be computed by comparing the first diffraction pattern with the second diffraction pattern as detected by sensor 132.

FIG. 9 is a side view illustrating how emitter 110 and detector 112 of the type described in connection with FIGS. 3-7 can be used to measure depth displacement along the X direction. For illustrative purposes, FIG. 9 shows only one exemplary light-emitting component 120 and one opening 136' in the mask structure 134, but the principles described below can extend to an emitter 110 with any number of light-emitting components 120 and a detector 112 with any number of mask openings 136'. As shown in FIG. 9, light-emitting component 120, when disposed at a third position can emit diffused light 152 that produces a corresponding third diffraction pattern that is detected by image sensor 132. If the light source moves in the direction of arrow 150 to a fourth position closer towards sensor 132, then the same light-emitting component in the new position (see 120') will then emit diffused light 152' that produces a corresponding fourth diffraction pattern (or mask pattern shadow) that is detected by image sensor 132. Here, the fourth diffraction pattern will be larger than the third diffraction pattern. Such change in size or scale in the detected diffraction patterns can be used to determine a corresponding amount of movement (translation) along the X axis. In other words, a relative translational displacement between the two optical modules in X direction can be computed by comparing the first diffraction pattern with the second diffraction pattern as detected by sensor 132.

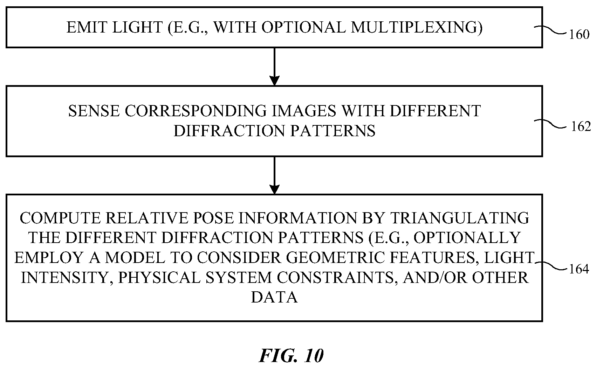

FIG. 10 is a flowchart of illustrative steps for using emitter 110 and detector 112 of the type described in connection with FIGS. 3-9 to measure relative pose displacement between optical modules 40-1 and 40-2 in accordance with some embodiments. During the operation of block 160, emitter 110 can be configured to emit light such as diffused light. In one embodiment, all light-emitting components 120 within emitter 110 can be simultaneously activated or pulsed. Alternatively, light-emitting components 120 can be multiplexed in time. For example, in the embodiment of FIGS. 4-5 having three components 120-1, 120-2, and 120-3, component 120-1 can be activated during a first time period, component 120-2 can then be activated during a second period following the first period, component 120-3 can then be activated during a third period following the second period, and so on (e.g., one LED can be selectively activated to emit light pulses at a time). As another example, components 120-1 and 120-2 can be concurrently activated during a first period, components 120-2 and 120-3 can then be concurrently activated during a second period following the first period, components 120-1 and 120-3 can then be concurrently activated during a third period following the second period, and so on (e.g., two LEDs can be selectively activated to emit light pulses at a time). Multiplexing of different LEDs in this way is optional.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

During the operations of block 162, detector 112 can be configured to sense corresponding images with different diffraction patterns. In some embodiments, detector 112 may be configured to periodically obtain images (e.g., by using image sensor 132 to capture more than 20 frames per second, more than 30 frames per second, more than 50 frames per second, more than 100 frames per second, less than 50 frames per second, less than 30 frames per second, less than 20 frames per second, less than 10 frames per second, less than 5 frames per second, or less than 2 frames per second, etc.). In some embodiments, detector 112 may be configured to obtain images in response to detecting movement at either optical module 40. For example, one or more inertial measurement unit (IMU) or other motion sensor can be included within device 10 for detecting movement of optical modules 40-1 and 40-2. As optical modules 40-1 and 40-2 move relative to each other, images with different diffraction patterns can be sensed by detector 112.

During the operations of block 164, device 10 may be configured to compute a relative pose displacement between optical modules 40-1 and 40-2 by triangulating the various diffraction patterns (e.g., based on at least three edges in the 3D space) sensed during block 162. By observing translation and scaling of diffraction patterns while time-multiplexing the activation of the light-emitting components 120 within emitter 110, a 6DoF relative pose displacement between optical modules 40-1 and 40-2 can be computed. Such processing and triangulation of diffraction patterns can be performed at control circuitry 20 of device 10 (see FIG. 2). If desired, control circuitry 20 can optionally employ a trained model for analyzing the detected diffraction patterns. As an example, the trained model can implement a feature-based technique that detects corners, lines, and/or other geometric positional features of the diffraction patterns.

As another example, the trained model can implement an intensity-based technique that compares the intensity of light on a per-pixel basis to match entire image patterns instead of relying on certain geometric features (e.g., corners). This intensity-based approach can include comparing the detected diffraction pattern to a simulated diffraction pattern to identify a relative pose displacement that minimizes the difference between the two patterns. The simulated diffraction pattern can be rendered by control circuitry 20 (see FIG. 1) or by other processing element in detector 112 based on an estimated relative pose displacement between modules 40-1 and 40-2. Alternatively, a set of pre-simulated diffraction patterns corresponding to different relative pose displacements can be stored on device 10. The trained model can further consider additional system constraints such as certain physical constraints that prevent the optical modules from moving in a certain way, etc. In other words, the model can be configured to receive light intensity information and physical constraints associated with movements of optical modules 40-1 and 40-2 within device 10 as inputs. Employing such model over a geometric triangulation may be technically advantageous and beneficial to provide improved signal-to-noise ratio (SNR) for the overall determination of relative pose displacement. If desired, control circuitry 20 can, in addition to considering only the diffraction patterns sensed by detector 112, also consider emission characteristics at emitter 110 such as the emission current at the source to further improve the SNR. In general, a control diffraction pattern corresponding to the default relative pose of optical modules 40-1 and 40-2 may be calibrated a priori. A deviation from the control diffraction pattern can then be analyzed to compute an offset from the default relative pose to determine the relative pose displacement from the default relative pose.

The operations of FIG. 10 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

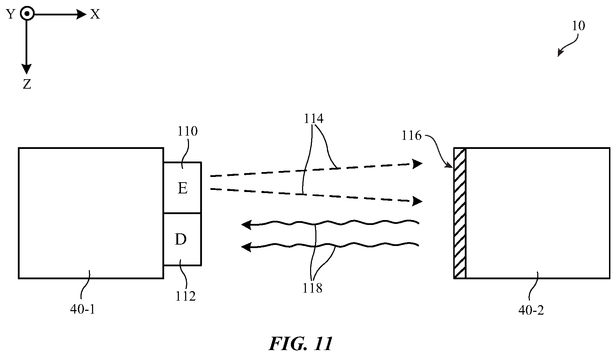

The example of FIG. 4 in which emitter 110 is disposed at optical module 40-1 and detector 112 is disposed at optical module 40-2 is illustrative. FIG. 11 shows another embodiment of device 10 where emitter 110 and detector 112 are both disposed at optical module 40-1. As shown in FIG. 11, emitter 110 can be configured to emit diffused light 114 towards optical module 40-2. The diffused light 114 can reflect off a layer such as layer 116 on optical module 40-2 and travel back towards detector 112 (see reflected light 118). Layer 116 can be a reflective layer or other thin-film interference layer. If desired, layer 116 can be entirely omitted, and the emitted light 114 can simply bounce off a flat surface of optical module 40-2 and propagate back towards detector 112. Such surface of optical module 40-2 need not be reflective if emitter 110 is configured to emit a relatively high-power light. The structure of emitter 110 in FIG. 11 is similar to that already described in connection with FIGS. 5A and 5B. The structure of detector 112 in FIG. 11 is similar to that already described in connection with FIGS. 6 and 7. The operations of FIG. 11 can also be used to operate device 10 of FIG. 11 to compute the relative pose displacement between optical modules 40-1 and 40-2 with improved SNR and need not be reiterated to avoid obscuring the present embodiment.

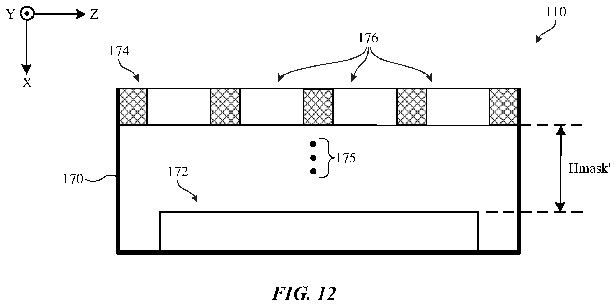

The embodiments described above in connection with FIGS. 5-11 in which only detector 112 has a mask structure are exemplary. In accordance with other embodiments, emitter 110 can optionally include a separate mask structure (see, e.g., FIG. 12). FIG. 12 is side view of illustrative emitter 110 having its own mask structure. As shown in FIG. 12, emitter 110 may include an emitter housing 170, sometimes referred to as a module housing. A light source such as light source 172 may be disposed at a base of housing 170. Light source 172 can be a display panel (e.g., a light source having an array of display pixels), a light panel (e.g., an unpixellated light source), a light source configured to output diffused light, a light source configured to output coherent light, a laser source, or other types of light source. In the example where light source 172 is a pixelated display panel, portions or regions of the display pixel array can be selectively activated and deactivated at different times to mimic a time multiplexing emission scheme, if desired.

A mask structure such as mask structure 174 can be disposed over light source 172. Mask structure 174 is within emitter 110 is sometimes referred to herein as an emitter masking layer. Emitter mask structure 174 may extend from one edge of housing 170 to another edge of housing 170. Mask structure 174 can be configured as a top cover layer for emitter 110. Mask structure 174 may be disposed a distance (height) Hmask' away from light source 172. This mask-to-source height Hmask' can be configured or selected based on desired emission requirements. Mask structure 174 may represent an opaque layer with a plurality of openings 176. A portion of the light emitted from light source 172 will be blocked by the opaque portions of mask structure 174 while remaining portions of the emitted light can travel through openings 176 and towards detector 112 (see FIG. 4). Openings 176 may be air gaps or can optionally be filled with transparent material such as glass, acrylic, polycarbonate, quartz, resin, or other transparent or translucent material. These transparent openings 176 are thus sometimes referred to herein as transparent (light-transmitting) windows or holes.

The example of FIG. 12 in which emitter 110 includes a single layer of mask structure 174 is illustrative. If desired, emitter 110 can include two or more mask layers 174 stacked vertically with respect to one another to help constrain the emission pattern of light source 172, as illustrated by ellipsis 175. As an example, the two or more mask layers 174 can be parallel to one another. As another example, at least some of the two or more mask layers 174 can be angled or tilted with respect to one another. In general, the pattern of emitter mask layer 174 should match or be identical to the pattern of detector masking layer 134. As an example, if the detector masking layer 134 is a mask having a 4x4 array of openings as shown in FIG. 7, then the emitter masking layer 174 should likewise be a matching mask having a 4x4 array of openings. In other embodiments, the detector masking layer 134 can optionally be mismatched from the emitter masking layer 174 (e.g., mask structures 134 and 174 can have different hole patterns).

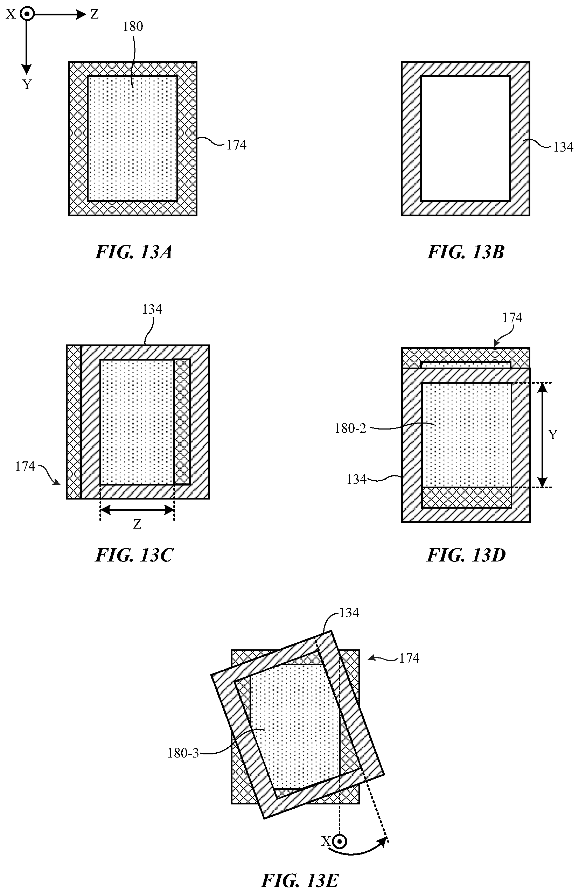

In general, the mask structures 134 and 174 can have any suitable pattern. FIGS. 13A-13E are front views of illustrative mask structures 134 and 174 having a single opening. FIG. 13A is a front view of emitter mask structure 174, where the shaded region 180 represents the constrained pattern of emitted light traversing through mask structure 174. FIG. 13B is a front view of the corresponding matching detector mask structure 134 within the detector. FIG. 13C illustrates a first scenario in which there is a translational (lateral) shift in the Z direction. Such translational displacement can be detected by sensing a pattern of shaded region 180-1, which represents the pattern of emitted light output from the masked emitter and finally reaching the image sensor of the masked detector (e.g., the light pattern 180-1 being sensed will have traversed both mask structures 134 and 174). This provides relative displacement measurement sensitivity in the X direction.

FIG. 13D illustrates a second scenario in which there is a translational (lateral) shift in the Y direction. Such translational displacement can be detected by sensing a pattern of shaded region 180-2, which represents the pattern of emitted light output from the masked emitter and finally reaching the image sensor of the masked detector (e.g., the light pattern 180-2 being sensed will have traversed both mask structures 134 and 174). This provides relative displacement measurement sensitivity in the Y direction. FIG. 13E illustrates a third scenario in which there is a rotational displacement about the X axis. Such rotational displacement can be detected by sensing a pattern of shaded region 180-3, which represents the pattern of emitted light output from the masked emitter and finally reaching the image sensor of the masked detector (e.g., the light pattern 180-3 being sensed will have traversed both mask structures 134 and 174). This provides relative displacement measurement sensitivity about the X axis. The use of masking structures 134 and 174 each having only one opening can thus provide detection of up to three degrees of freedom (e.g., relative translational displacement in the Z direction, relative translational displacement in the Y direction, and relative rotational displacement about the X axis).

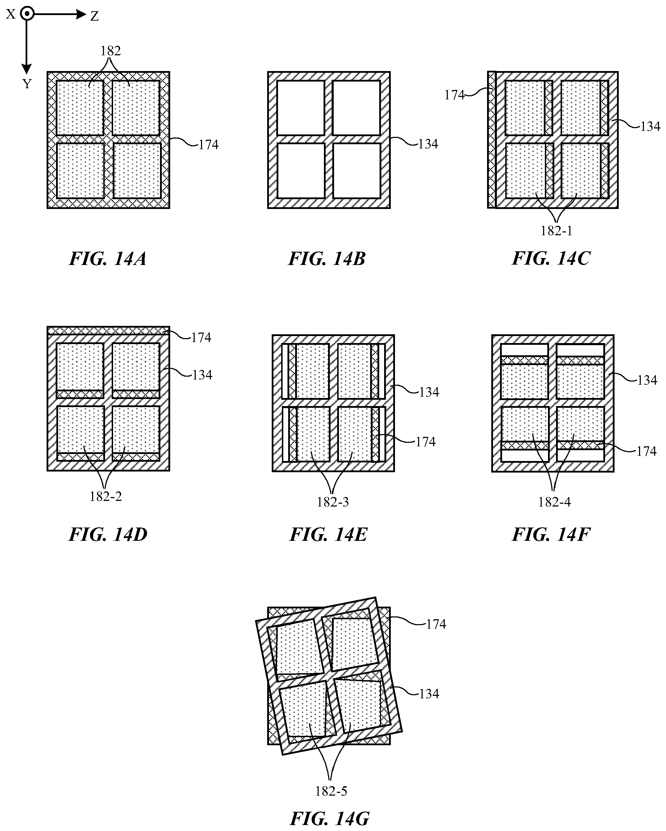

FIGS. 14A-14G are front views of illustrative mask structures 134 and 174 having an array of openings (e.g., an array of 2x2 openings or windows). FIG. 14A is a front view of emitter mask structure 174, where the shaded regions 182 represent the constrained pattern of emitted light traversing through mask structure 174. FIG. 14B is a front view of the corresponding matching detector mask structure 134 within the detector. FIG. 14C illustrates a first scenario in which there is a translational (lateral) shift in the Z direction. Such translational displacement can be detected by sensing a pattern of shaded regions 182-1, which represents the pattern of emitted light output from the masked emitter and finally reaching the image sensor of the masked detector (e.g., the light pattern 182-1 being sensed will have traversed both mask structures 134 and 174). This provides relative displacement measurement sensitivity in the X direction. FIG. 14D illustrates a second scenario in which there is a translational (lateral) shift in the Y direction. Such translational displacement can be detected by sensing a pattern of shaded regions 182-2, which represents the pattern of emitted light output from the masked emitter and finally reaching the image sensor of the masked detector (e.g., the light pattern 182-2 being sensed will have traversed both mask structures 134 and 174). This provides relative displacement measurement sensitivity in the Y direction.

FIG. 14E illustrates a third scenario in which there is a rotational displacement about the Y axis. Such rotational displacement can be detected by sensing a pattern of shaded regions 182-3, which represents the pattern of emitted light output from the masked emitter and finally reaching the image sensor of the masked detector (e.g., the light pattern 182-3 being sensed will have traversed both mask structures 134 and 174). This provides relative displacement measurement sensitivity about the Y axis. FIG. 14F illustrates a fourth scenario in which there is a rotational displacement about the Z axis. Such rotational displacement can be detected by sensing a pattern of shaded regions 182-4, which represents the pattern of emitted light output from the masked emitter and finally reaching the image sensor of the masked detector (e.g., the light pattern 182-4 being sensed will have traversed both mask structures 134 and 174). This provides relative displacement measurement sensitivity about the Z axis.

FIG. 14G illustrates a fifth scenario in which there is a rotational displacement about the X axis. Such rotational displacement can be detected by sensing a pattern of shaded regions 182-5, which represents the pattern of emitted light output from the masked emitter and finally reaching the image sensor of the masked detector (e.g., the light pattern 182-5 being sensed will have traversed both mask structures 134 and 174). This provides relative displacement measurement sensitivity about the X axis. The use of masking structures 134 and 174 each having an array of 2-by-2 openings can thus provide detection of up to five degrees of freedom (e.g., relative translational displacement in the Z direction, relative translational displacement in the Y direction, relative rotational displacement about the Y axis, relative rotational displacement about the Z axis, and relative rotational displacement about the X axis.

The example of FIG. 14 in which mask structures 134 and 174 each have an array of 2x2 openings is illustrative. In general, having more openings can provide greater detection resolution (e.g., to provide increased accuracy in measuring displacement in any particular direction), which can help reduce the impacts of mask manufacturing defects or image capture error. In general, mask structures 134 and 174 can each be a masking layer having more than four openings, more than ten openings, more than 25 openings, more than 50 openings, more than 100 openings, more than 500 openings, or more than 1000 openings.

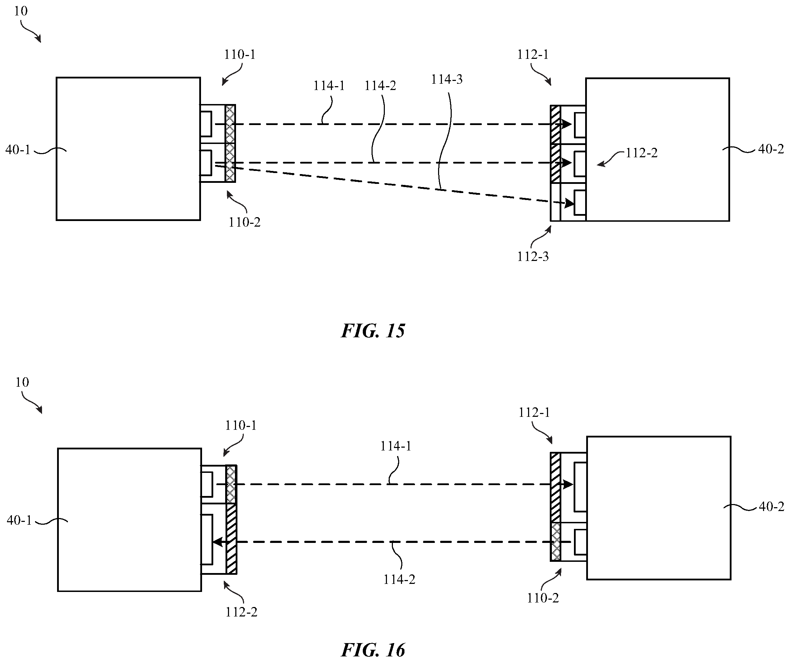

The examples described above in which head-mounted device 10 includes only a single emitter-detector pair (e.g., one emitter 110 disposed at one optical module and one detector 112 disposed at the other optical module) are illustrative. FIG. 15 illustrates another embodiment in which head-mounted device 10 includes multiple emitter-detector pairs. Use of multiple emitter-detector pairs allow the system to measure more information, which allows the control circuitry to produce a more accurate relative pose displacement. As shown in FIG. 15, a first emitter 110-1 and a second emitter 110-2 can be disposed on optical module 40-1, whereas a first detector 112-1 and a second detector 112-2 are disposed on optical module 40-2. Emitters 110-1 and 110-2 can be masked emitters of the type described in connection with FIGS. 12-14. Emitter 110-1 may be configured to emit light (see, e.g., path 114-1) towards detector 112-1 and can collectively be associated with a first metrology type. Emitter 110-2 may be configured to emit light (see, e.g., path 114-2) towards detector 112-2 and can collectively be associated with a second metrology type different than the first metrology type. Emitters 110-1 an0 110-2 can be different types of emitters. Detectors 112-1 and 112-2 can be different types of detectors.

The example of FIG. 15 in which emitters and detectors are disposed at different optical modules is illustrative. If desired, certain metrology types can involve collocating the emitter and detector at one optical module, as shown in the example of FIG. 11. Such metrology types can include a light detection and ranging (LiDAR) sensor or a depth sensor. For example, a depth sensor disposed at module 40-1 or 40-2 can be used to obtain a depth value by sensing a distance between modules 40-1 and 40-2. The relative pose displacement determined by the control circuitry can also be computed based on such depth value or distance information. Use of optical sensors of multiple different metrology types in device 10 can be technically advantageous and beneficial to further provide detection sensitivity in all six degrees of freedom (e.g., translational displacement in X, Y, and Z directions, and rotational displacement about X, Y, and Z axes). Still referring to FIG. 15, an additional detector 112-3 can optionally be placed at an angle with respect to emitter 110-2, as illustrated by light path 114-3. In other words, emitter 110-2 can be configured to output light towards both detector 112-2 and detector 112-3. Using emitter 110-2 in conjunction with two detectors 112-2 and 112-3, each positioned at a different alignment or angle with respect to emitter 110-2 can also allow the system to achieve pose displacement detection sensitivity in all six degrees of freedom.

FIG. 16 shows yet another suitable embodiment of device 10 having multiple emitter-detector pairs. As shown in FIG. 16, a first emitter 110-1 and a second detector 112-2 can be disposed on optical module 40-1, whereas a first detector 112-1 and a second emitter 110-2 are disposed on optical module 40-2. Emitters 110-1 and 110-2 can be masked emitters of the type described in connection with FIGS. 12-14. Emitter 110-1 may be configured to emit light (see, e.g., path 114-1) towards detector 112-1 and can collectively be associated with a first metrology type. Emitter 110-2 may be configured to emit light (see, e.g., path 114-2) towards detector 112-2 and can collectively be associated with a second metrology type different than the first metrology type. In the example of FIG. 16, the detectors 112 are larger components than the emitters 110, so pairing the smaller emitter 110-1 with the larger detector 112-2 can help alleviate space constraints at optical module 40-1. Similarly, at the other end, pairing the smaller emitter 110-2 with the larger detector 112-1 can help alleviate space constraints at optical module 40-2. Moreover, the use of optical sensors of multiple different metrology types in device 10 can be technically advantageous and beneficial to further provide detection sensitivity in all six degrees of freedom (e.g., translational displacement in X, Y, and Z directions, and rotational displacement about X, Y, and Z axes). If desired, device 10 can include three or more metrology types for measuring relative pose displacement between optical modules 40-1 and 40-2.

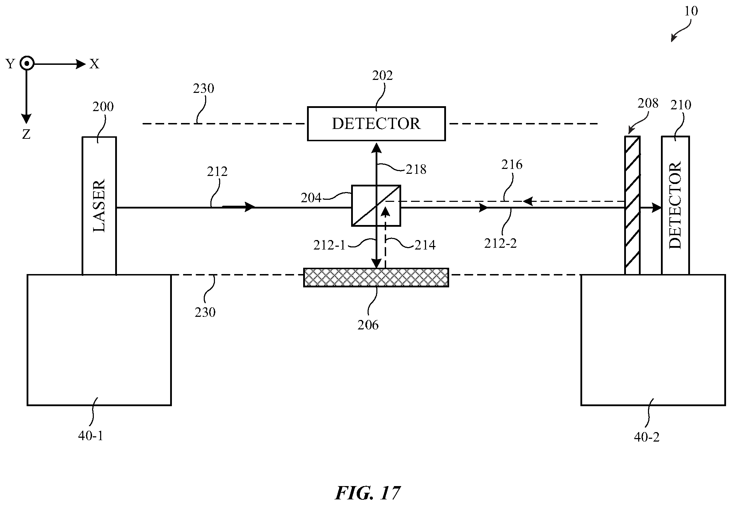

The embodiments of FIGS. 4-16 for measuring the relative pose displacement between optical modules 40-1 and 40-2 of head-mounted device 10 are illustrative. FIG. 17 shows another embodiment for measuring the relative pose displacement between optical modules 40-1 and 40-2 within head-mounted device 10. As shown in FIG. 17, a light source such as light source 200 may be disposed on or at optical module 40-1, a first mirror component such as a half mirror 208 disposed on or at optical module 40-2, a beam splitter such as beam splitter 204 disposed between light source 200 and half mirror 208, a second mirror component such as a reflective mirror 206 disposed at a first side of beam splitter 204, a first detector such as detector 202 disposed at a second side (opposing the first side) of beam splitter 204, and a second detector such as detector 210 disposed on or at optical module 40-2. Light source 200 may be configured to output a coherent light beam such as a laser beam. A "coherent" light beam can refer to a beam of light in which the waves have a constant phase relationship and a single wavelength or a narrow range of wavelengths (e.g., the light waves are in sync with each other and maintain a fixed phase difference over time and space). Light source 200 is thus sometimes referred to as a laser source. As an example, laser source 200 may be a vertical-cavity surface-emitting laser (VCSEL). The term "half" mirror may refer to and be defined herein as a partially reflective mirror structure that reflects a first portion of the incidence light while transmitting through a second portion of the incident light.

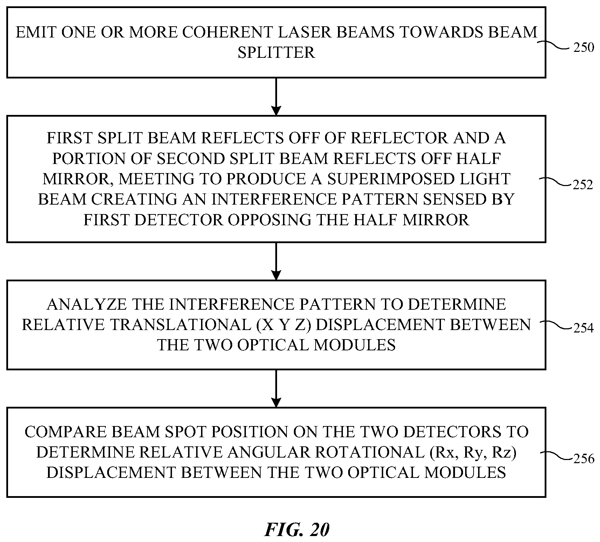

Such light-emitting and various detector components of FIG. 17 operates on the principle of optical interference, where two coherent light beams interact to produce a pattern of constructive and destructive interference. FIG. 20 shows a flowchart of illustrative steps for operating the various light-emitting and sensing components shown in at least FIG. 17. During the operations of block 250, light source 200 can be configured to emit a light beam 212 towards beam splitter 204. For example, VCSEL 200 can emit one or more laser pulses toward beam splitter 204. Beam splitter 204 may refer to an optical component that divides a beam of light into two or more separate beams, such as by reflecting a portion of the incoming light while transmitting the rest of the incoming light. Various types of beam splitter 204 can be employed. Beam splitter 204 can receive light beam 212 output from light source 200 and output a first light beam 212-1 towards reflective mirror 206 and a second light beam 212-2 towards half mirror 208.

During the operations of block 252, the first light beam 212-1 reflects (bounces) off mirror 206 and propagates back towards beam splitter 204 as reflected light 214. Meanwhile, a first portion of the second light beam 212-2 reflects (bounces) off half mirror 208 and propagates back towards beam splitter as reflected light 216. Reflected light 214 and reflected light 216 can meet and interfere with each other (e.g., constructively and destructively interfere according to the superposition of electromagnetic waves of the two light beams) to produce superimposed light beam 218. The superimposed light beam 218 can then be sensed by detector 202. Detector 202 may be a two-dimensional (2D) image sensor having hundreds or thousands of image pixels. The superimposed light beam 218 can create a corresponding interference pattern based on a phase (shift) difference between light beam 214 and light beam 216. Light such as light beams 212, 212-2, and 216 propagating between optical modules 40-1 and 40-2 as shown in FIG. 17 can be conveyed through a light pipe, light guide, light tube, waveguide, or other optical tunnel/conduit, as shown by dotted pathway 230. The interference pattern created by the superimposed light beam 218 can be sensed by detector 202.

During the operations of block 254, associated control circuitry such as control circuitry 20 of FIG. 2 can analyze the interference pattern to determine a relative translational (XYZ) displacement in the 3D space. In other words, a relative translational displacement between the two optical modules in XYZ directions can be computed by comparing the interference pattern as sensed by detector 202 to a default interference pattern associated with the default relative pose. In general, the default interference pattern corresponding to the default relative pose of optical modules 40-1 and 40-2 may be calibrated a priori. A deviation from the default interference pattern can then be analyzed to compute an offset from the default relative pose to determine the relative pose (translational) displacement from the default relative pose.

The operations of block 254 can be used to determine relative movement or shift between optical modules 40-1 and 40-2 in the XYZ space. Additionally, during the operations of block 256, information from the two detectors 202 and 210 can be compared to determine the relative rotational (angular) displacement between modules 40-1 and 40-2. As described above, detector 202 can receive superimposed light 218, which can create a first beam (light) spot that is sensed by detector 202 in addition to the interference pattern. The first beam (laser) spot created by light 218 can have a different size and/or can fall at varying locations on the image sensor of detector 202 depending on the relative rotational displacement between the two optical modules 40-1 and 40-2. Moreover, a portion of light beam 212-2 propagating towards half mirror 208 may be transmitted through half mirror 208 and sensed by the second detector 210. Detector 210 may be a two-dimensional (2D) image sensor having hundreds or thousands of image pixels. Detector 210 can receive the portion of light 212-2 being transmitted through half mirror 208, which creates a second beam (light) spot that is sensed by detector 210. The second beam (laser) spot created by light transmitted through half mirror 208 can have a different size and/or can fall at varying locations on the image sensor of detector 210 depending on the relative rotational displacement between the two optical modules 40-1 and 40-2. In other words, control circuitry 20 can compare the position and/or size of the first beam spot sensed by detector 202 with the position and/or size of the second beam spot sensed by detector 210 to determine a relative angular rotation (Rx, Ry, Rz) displacement between the two optical modules 40-1 and 40-2.

Although the operations of block 256 are shown as occurring after the operations of block 254, the operations of block 256 can occur before or concurrently with the operations of block 254. By combining the interference pattern information gathered from block 254 and the beam spot information gathered from block 256, control circuitry 20 can compute sub-micron-level translation and angular deviations (e.g., relative pose displacements) between the two optical modules 40-1 and 40-2.

In general, light source 200 can be configured to emit laser pulses of one or more different wavelengths. As an example, light source 200 can output laser pulses of a single wavelength. As another example, light source 200 can be configured to output two lasers with different wavelengths. By employing two coherent laser sources, the system can sense two interference patterns corresponding to the two different wavelengths. The phase (shift) difference at each wavelength will be proportional to the optical path length difference, but the effective wavelength of the system becomes the synthetic wavelength as determined by the beat frequency between the two wavelengths. This synthetic wavelength is much longer than either of the individual wavelengths. Thus, by comparing the phase measurements from the two different wavelengths, the system can uniquely resolve displacements beyond a single wavelength, significantly extending the measurement range. Such multi-wavelength approach can be technically advantageous and beneficial to enable high-resolution measurements over larger displacements while preserving sensitivity to sub-micron-level translational and rotational displacement. Moreover, light source 200 can optionally be polarized (e.g., linearly polarized) to further produce rotational information for the beam.

The operations of FIG. 20 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

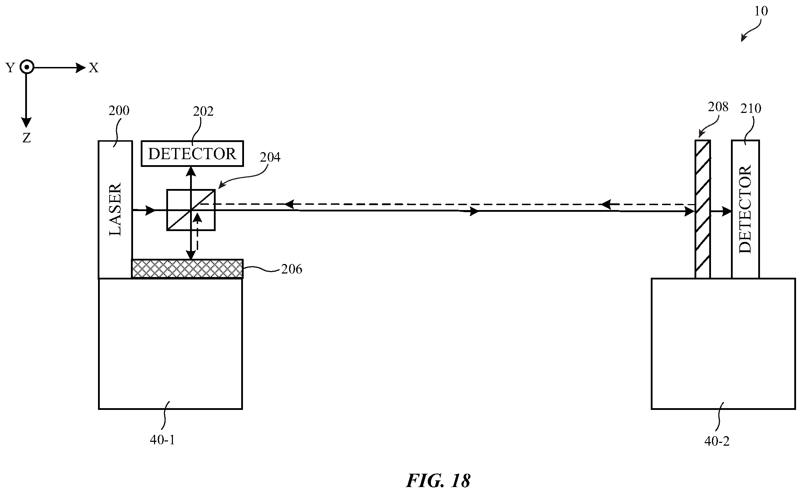

The embodiment of FIG. 17 in which beam splitter 204, detector 202, and reflective mirror 206 is disposed at some location between optical modules 40-1 and 40-2 is exemplary. If desired, beam splitter 204, detector 202, and mirror 206 can be disposed at a midpoint or other intermediate location between modules 40-1 and 40-2. FIG. 18 illustrates another embodiment of device 10 where beam splitter 204, detector 202, and mirror 206 are disposed at or on optical module 40-1 (e.g., near light source 200). Here, laser source 200, beam splitter 204, detector 202, and reflective mirror 206 are all collocated at optical module 40-1. The working principle of such arrangement is similar to that already described in connection with FIG. 17 and can therefore employ similar operational steps shown in FIG. 20, which need not be reiterated to avoid obscuring the present embodiment.

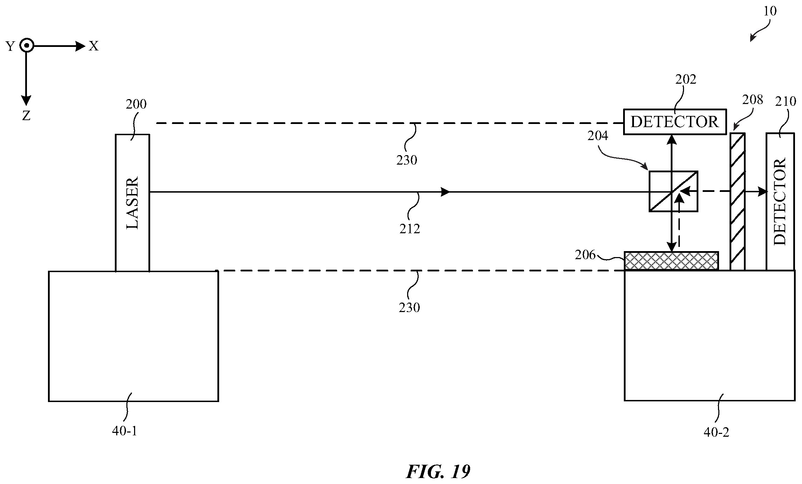

Alternatively, FIG. 19 illustrates yet another embodiment of device 10 where beam splitter 204, detector 202, and mirror 206 are disposed at or on optical module 40-2 (e.g., near detector 210). Here, beam splitter 204, detector 202, reflective mirror 206, half mirror 208, and detector 210 are all collocated at optical module 40-2. The working principle of such arrangement is similar to that already described in connection with FIG. 17 and can therefore employ similar operational steps shown in FIG. 20, which need not be reiterated to avoid obscuring the present embodiment.

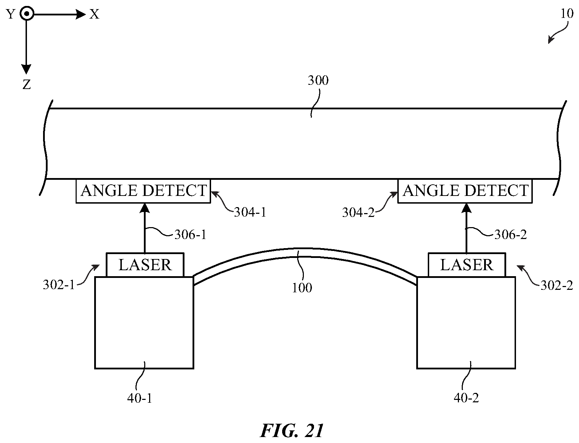

In accordance with another embodiment that is not mutually exclusive with the embodiments described in connection with FIGS. 4-20, FIG. 21 shows how head-mounted device 10 can further include multiple angle detectors 304 that are disposed on a rigid structure such as rigid support structure 300 of device 10. Rigid structure 300 may a first portion that extends past optical module 40-1 and a second portion that extends past optical module 40-2. As shown in FIG. 21, a first angle detector 304-1 may be attached to a first location at the first portion of rigid support structure 300, whereas second angle detector 304-2 may be attached to a second location at the second portion of rigid support structure 300. A first light source such as light source 302-1 may be disposed on or at optical module 40-1, whereas a second light source such as light source 302-2 may be disposed on or at optical module 40-2. Each light source 302 may be configured to output a coherent light beam such as a laser beam. Light sources 302-1 and 302-2 are thus sometimes referred to as a laser sources. As an example, laser sources 302 may be vertical-cavity surface-emitting lasers (VCSELs). Optical modules 40-1 and 40-2 are not fixed to rigid support structure 300 and can move relative to one another as flexible support structure 100 bends or twists.

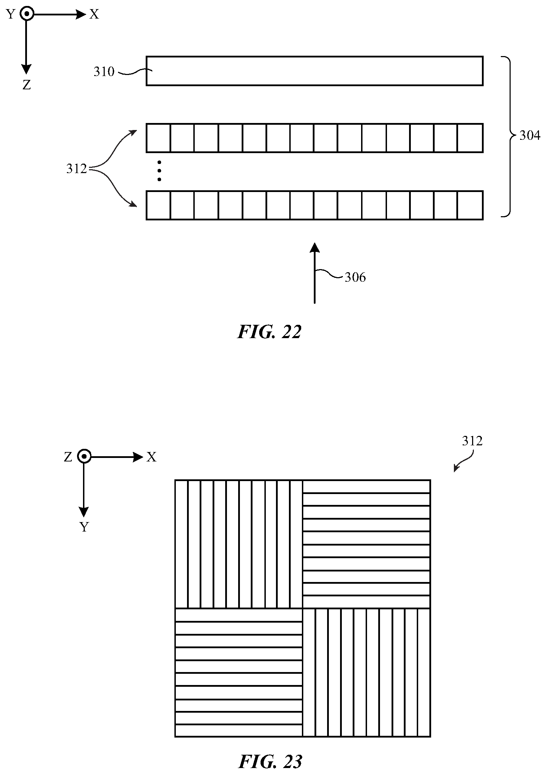

FIG. 22 is a side view of an illustrative angle detector 304 of the type shown in FIG. 21. As shown in FIG. 22, angle detector 304 may include an image sensor 310 and one or more layers of grating structures 312 disposed over the image sensor 310. Image sensor 310 may include an array of imaging pixels (e.g., hundreds or thousands of pixels). Incoming light 306 can propagating through the grating layers 312 and be sensed by image sensor 310. FIG. 23 is a front view of an illustrative grating structure 312 that can be included as part of the angle detector 304. As shown in FIG. 23, grating structure 312 can have one or more first portion(s) with gratings parallel to the Y direction and one or more second portion(s) with gratings parallel to the X direction. Such grating arrangement is merely exemplary. In general, grating structure 312 can be divided into any number of portions, each of which can have gratings running along the same or varying directions. Detector 304 of such type is sometimes referred to as a Talbot sensor or other types of optical sensor operable to sense an incidence angle of light.

During normal operation, light source 302-1 may emit a first coherent (laser) beam 306-1 towards first angle detector 304-1 while light source 302-2 emits a second coherent (laser) beam 306-2 towards second angle detector 304-2. Beams 306-1 and 306-2 can optionally be polarized (e.g., using a linear polarizer at the output of VCSEL 302). Operated in this way, detector 304-1 can receive light beam 306-1 from light source 302-1, which can create a first beam (light) spot that is sensed by detector 304-1. The first beam (laser) spot created by light 306-1 can have a different size and/or can fall at varying locations on the image sensor of detector 304-1 depending on the relative rotational displacement between the optical module 40-1 and rigid structure 300. At the other end, detector 304-2 can receive light beam 306-2 from light source 302-2, which can create a second beam (light) spot that is sensed by detector 304-2. The second beam (laser) spot created by light 306-2 can have a different size and/or can fall at varying locations on the image sensor of detector 304-2 depending on the relative rotational displacement between the optical module 40-2 and rigid structure 300. In other words, control circuitry 20 can compare the position and/or size of the first beam spot sensed by detector 304-1 with the position and/or size of the second beam spot sensed by detector 304-2 to determine a relative angular rotation (Rx, Ry, Rz) displacement between the two optical modules 40-1 and 40-2.

The example of FIG. 21 in which both angle detectors 304 are mounted along a single plane (facing the same direction) or on a common straight edge of rigid support structure 300 of device 10 is illustrative. In other embodiments, the two angle detectors 304-1 and 304-2 can be mounted on different surfaces, edges, or portions of a rigid support structure of device 10. In general, such rigid support structure need not be straight but can have any physical shape. In such scenarios, light sources 302-1 and 302-2 may be pointed in different directions. In general, the default spot position and/or size of the sensed beams corresponding to the default relative pose of optical modules 40-1 and 40-2 may be calibrated a priori. A deviation from the default spot position and/or size can then be analyzed by control circuitry 20 to compute an offset from the default relative pose to determine the relative pose (e.g., rotational) displacement from the default relative pose.

The methods and operations described above in connection with FIGS. 1-23 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., the storage circuitry within control circuitry 20 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., one or more processors in control circuitry 20). The processing circuitry may include microprocessors, application processors, digital signal processors, central processing units (CPUs), application-specific integrated circuits with processing circuitry, or other processing circuitry.

Many different types of electronic systems can enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers.

To help protect the privacy of users, any personal user information that is collected at device 10 may be handled using best practices. These best practices including meeting or exceeding any privacy regulations that are applicable. Opt-in and opt-out options and/or other options may be provided that allow users to control usage of their personal data.

In accordance with an embodiment, a head-mounted device includes: a first optical module configured to output content to a first eye box; a second optical module configured to output content to a second eye box; a support structure attaching the first optical module to the second optical module, where the support structure at least partially includes a flexible portion that, when flexed, allows the first and second optical modules to move with respect to each other; an emitter disposed on the first optical module and configured to emit light; a detector that includes a patterned mask having a plurality of openings and an image sensor configured to receive at least a portion of the light propagating through the plurality of openings in the patterned mask to sense one or more corresponding diffraction patterns; and control circuitry configured to analyze the one or more diffraction patterns sensed by the image sensor of the detector to determine a relative pose displacement between the first and second optical modules.

In accordance with another embodiment, the emitter optionally includes a first light-emitting component configured to emit light in a first range of wavelengths, a second light-emitting component configured to emit light in a second range of wavelengths different than the first range of wavelengths, and a third light-emitting component configured to emit light in a third range of wavelengths different than the first and second ranges of wavelengths.

In accordance with another embodiment, the first light-emitting component is optionally disposed at a first depth within the emitter; the second light-emitting component is optionally disposed at a second depth, different than the first depth, within the emitter; and the third light-emitting component is optionally disposed at a third depth, different than the first and second depths, within the emitter.

In accordance with another embodiment, the first light-emitting component is optionally selectively activated during a first time period, the second light-emitting component is optionally selectively activated during a second time period after the first time period, and the third light-emitting component is optionally selectively activated during a third time period after the second time period.

In accordance with another embodiment, the first and second light-emitting components are optionally concurrently activated during a first time period, the second and third light-emitting components are optionally concurrently activated during a second time period after the first time period, and the first and third light-emitting components are optionally concurrently activated during a third time period after the second time period.

In accordance with another embodiment, the detector optionally includes an additional pattern mask stacked on the patterned mask.

In accordance with another embodiment, the control circuitry is optionally configured to determine the relative pose displacement between the first and second optical modules based on a model configured to analyze one or more of: geometric features of the one or more diffraction patterns, light intensity information of the one or more diffraction patterns, and physical constraints associated with movements of the first and second optical modules.

In accordance with another embodiment, the detector is optionally disposed on the second optical module.

In accordance with another embodiment, the detector is optionally disposed on the first optical module, and a reflective layer disposed on the second optical module is optionally configured to reflect the light output from the emitter back towards the detector.

In accordance with another embodiment, the emitter optionally includes an additional patterned mask having a plurality of openings and a light source configured to output light propagating through the plurality of openings in the additional patterned mask.

In accordance with another embodiment, the head-mounted device optionally further includes a depth sensor disposed at the first optical module or the second optical module, where the depth sensor is configured to output a depth value based on a distance between the first and second optical modules, and where the control circuitry is further configured to analyze the depth value to determine the relative pose displacement between the first and second optical modules.

In accordance with another embodiment, the head-mounted device optionally further includes an additional emitter disposed at the second optical module and an additional detector disposed at the first optical module, where the additional emitter is configured to emit light towards the additional detector, and where the control circuitry is configured to analyze information measured by the additional detector to determine the relative pose displacement between the first and second optical modules.

In accordance with another embodiment, the head-mounted device optionally further includes an additional detector disposed at the second optical module and configured to receive the light from the emitter, where the control circuitry is further configured to analyze information measured by the additional detector to determine the relative pose displacement between the first and second optical modules.

In accordance with an embodiment, a head-mounted device includes: a first optical module configured to output content to a first eye box; a second optical module configured to output content to a second eye box; a support structure attaching the first optical module to the second optical module, where the support structure at least partially includes a flexible portion that, when flexed, allows the first and second optical modules to move with respect to each other; a light source disposed on the first optical module and configured to output a coherent light beam; a beam splitter configured to split the coherent light beam into a first light beam and a second light beam; a reflective mirror configured to reflect the first light beam; a half mirror disposed on the second optical module and configured to reflect a portion of the second light beam; a first detector configured to sense an interference pattern created from a phase shift difference between the first light beam reflecting back from the reflective mirror and the portion of the second light beam reflecting back from the half mirror; and control circuitry configured to analyze the interference pattern sensed by the first detector to determine a relative translational displacement between the first and second optical modules.

In accordance with another embodiment, the head-mounted device optionally further includes a second detector configured to sense a portion of the second light beam transmitted through the half mirror.

In accordance with another embodiment, the first detector is optionally configured to sense a first beam spot associated with a superimposed light beam that includes the first light beam reflecting back from the reflective mirror and the portion of the second light beam reflecting back from the half mirror; the second detector is optionally configured to sense a second beam spot associated with the portion of the second light beam transmitted through the half mirror; and the control circuitry is optionally configured to analyze a location of the first beam spot in the first detector and a location of the second beam spot in the second detector to determine a relative rotational displacement between the first and second optical modules.

In accordance with another embodiment, the coherent light beam and the first light beam optionally propagate between the first and second optical modules via a light pipe, a light guide, a light tube, or a waveguide between the first and second optical modules.

In accordance with another embodiment, the beam splitter, the reflective mirror, and the first detector are optionally disposed at an intermediate location between the first and second optical modules.

In accordance with another embodiment, the beam splitter, the reflective mirror, and the first detector are optionally disposed at or on the second optical module.

In accordance with another embodiment, the beam splitter, the reflective mirror, and the first detector are optionally disposed at or on the first optical module.

In accordance with an embodiment, a head-mounted device includes: a first optical module configured to output content to a first eye box; a second optical module configured to output content to a second eye box; a support structure attaching the first optical module to the second optical module, where the support structure at least partially includes a flexible portion that, when flexed, allows the first and second optical modules to move with respect to each other; a rigid structure extending between the first optical module and the second optical module; a first angle detector disposed at a first location on the rigid structure; a second angle detector disposed at a second location on the rigid structure; a first light source disposed on the first optical module and configured to output a first coherent beam towards the first angle detector; a second light source disposed on the second optical module and configured to output a second coherent beam towards the second angle detector; and control circuitry configured to analyze a location of a first beam spot sensed by the first angle detector and a location of a second beam spot sensed by the second angle detector to determine a relative rotational displacement between the first and second optical modules.

In accordance with another embodiment, the first angle detector optionally includes a first image sensor and one or more layers of grating structures disposed over the first image sensor, and the second angle detector optionally includes a second image sensor and one or more layers of grating structures disposed over the second image sensor.

In accordance with another embodiment, the first light source is optionally further configured to output a linearly polarized laser beam towards the first angle detector, and the second light source is optionally further configured to output a linearly polarized laser beam towards the second angle detector.

The foregoing is merely illustrative and various modifications can be made to the described embodiments. The foregoing embodiments may be implemented individually or in any combination.

## Claims

1. A head-mounted device comprising:
a first optical module configured to output content to a first eye box;
a second optical module configured to output content to a second eye box;
a support structure attaching the first optical module to the second optical module, wherein the support structure at least partially comprises a flexible portion that, when flexed, allows the first and second optical modules to move with respect to each other;
an emitter disposed on the first optical module and configured to emit light;
a detector that comprises:
a patterned mask having a plurality of openings; and
an image sensor configured to receive at least a portion of the light propagating through the plurality of openings in the patterned mask to sense one or more corresponding diffraction patterns; and
control circuitry configured to analyze the one or more diffraction patterns sensed by the image sensor of the detector to determine a relative pose displacement between the first and second optical modules.

2. The head-mounted device of claim 1, wherein the emitter comprises:
a first light-emitting component configured to emit light in a first range of wavelengths;
a second light-emitting component configured to emit light in a second range of wavelengths different than the first range of wavelengths; and
a third light-emitting component configured to emit light in a third range of wavelengths different than the first and second ranges of wavelengths.

3. The head-mounted device of claim 2, wherein:
the first light-emitting component is disposed at a first depth within the emitter;
the second light-emitting component is disposed at a second depth, different than the first depth, within the emitter; and
the third light-emitting component is disposed at a third depth, different than the first and second depths, within the emitter.

4. The head-mounted device of claim 2 or claim 3, wherein:
the first light-emitting component is selectively activated during a first time period;
the second light-emitting component is selectively activated during a second time period after the first time period; and
the third light-emitting component is selectively activated during a third time period after the second time period.

5. The head-mounted device of claim 2, wherein:
the first and second light-emitting components are concurrently activated during a first time period;
the second and third light-emitting components are concurrently activated during a second time period after the first time period; and
the first and third light-emitting components are concurrently activated during a third time period after the second time period.

6. The head-mounted device of any preceding claim, wherein the detector comprises an additional pattern mask stacked on the patterned mask.

7. The head-mounted device of any preceding claim, wherein the control circuitry is configured to determine the relative pose displacement between the first and second optical modules based on a model configured to analyze one or more of: geometric features of the one or more diffraction patterns, light intensity information of the one or more diffraction patterns, and physical constraints associated with movements of the first and second optical modules.

8. The head-mounted device of any preceding claim, wherein the detector is disposed on the second optical module.

9. The head-mounted device of any of claims 1 to 7, wherein the detector is disposed on the first optical module, and wherein a reflective layer disposed on the second optical module is configured to reflect the light output from the emitter back towards the detector.

10. The head-mounted device of any preceding claim, wherein the emitter comprises:
an additional patterned mask having a plurality of openings; and
a light source configured to output light propagating through the plurality of openings in the additional patterned mask.

11. The head-mounted device of any preceding claim, further comprising:
a depth sensor disposed at the first optical module or the second optical module, wherein the depth sensor is configured to output a depth value based on a distance between the first and second optical modules, and wherein the control circuitry is further configured to analyze the depth value to determine the relative pose displacement between the first and second optical modules.

12. The head-mounted device of any preceding claim, further comprising:
an additional emitter disposed at the second optical module; and
an additional detector disposed at the first optical module, wherein the additional emitter is configured to emit light towards the additional detector, and wherein the control circuitry is configured to analyze information measured by the additional detector to determine the relative pose displacement between the first and second optical modules.

13. The head-mounted device of any preceding claim, further comprising:
an additional detector disposed at the second optical module and configured to receive the light from the emitter, wherein the control circuitry is further configured to analyze information measured by the additional detector to determine the relative pose displacement between the first and second optical modules.

14. A head-mounted device comprising:
a first optical module configured to output content to a first eye box;
a second optical module configured to output content to a second eye box;
a support structure attaching the first optical module to the second optical module, wherein the support structure at least partially comprises a flexible portion that, when flexed, allows the first and second optical modules to move with respect to each other;
a light source disposed on the first optical module and configured to output a coherent light beam;
a beam splitter configured to split the coherent light beam into a first light beam and a second light beam;
a reflective mirror configured to reflect the first light beam;
a half mirror disposed on the second optical module and configured to reflect a portion of the second light beam;
a first detector configured to sense an interference pattern created from a phase shift difference between the first light beam reflecting back from the reflective mirror and the portion of the second light beam reflecting back from the half mirror; and
control circuitry configured to analyze the interference pattern sensed by the first detector to determine a relative translational displacement between the first and second optical modules.

15. The head-mounted device of claim 14, further comprising:
a second detector configured to sense a portion of the second light beam transmitted through the half mirror, wherein:
the first detector is configured to sense a first beam spot associated with a superimposed light beam that includes the first light beam reflecting back from the reflective mirror and the portion of the second light beam reflecting back from the half mirror;
the second detector is configured to sense a second beam spot associated with the portion of the second light beam transmitted through the half mirror;
the control circuitry is configured to analyze a location of the first beam spot in the first detector and a location of the second beam spot in the second detector to determine a relative rotational displacement between the first and second optical modules; and
the coherent light beam and the first light beam propagate between the first and second optical modules via a light pipe, a light guide, a light tube, or a waveguide between the first and second optical modules.
